Europäisches Patentamt

European Patent Office

Office européen des brevets

(11) Veröffentlichungsnummer: **0 023 304**
**A2**

(12) **EUROPÄISCHE PATENTANMELDUNG**

(21) Anmeldenummer: 80104057.7

(22) Anmeldetag: 12.07.80

(51) Int. Cl.³: **G 01 L 5/06**
**G 11 B 15/43**

(30) Priorität: 28.07.79 DE 2930739
10.08.79 DE 2932526

(43) Veröffentlichungstag der Anmeldung:
04.02.81 Patentblatt 81/5

(84) Benannte Vertragsstaaten:
AT BE CH FR GB IT LI LU NL SE

(71) Anmelder: König-Electronic Friedrich W. König
Steinstrasse 1-5
D-6101 Reichelsheim/Odw.(DE)

(72) Erfinder: Rämisch, Reinhard
Bismarckstrasse 6
D-6101 Reichelsheim/Odw.(DE)

(72) Erfinder: Hoffmann, Arthur Heinrich
G 2,7
D-6800 Mannheim 1(DE)

(74) Vertreter: Katscher, Helmut, Dipl.-Ing.
Bismarckstrasse 20
D-6100 Darmstadt(DE)

(54) Drehmoment-Messcassette für Cassetten-Tonbandgeräte.

(57) Bei einer Drehmoment-Meßcassette für Cassetten-Tonbandgeräte sind in einem Cassettengehäuse (1) zwei Bandteller (2, 3) drehbar gelagert, zwischen denen ein an beiden Bandtellern befestigtes Tonband (4) auf- und abspulbar ist. Das Tonband (4) wird über eine Umlenkrolle (7) geführt, die an einem längsbeweglichen Schlitten (8) gelagert ist. Eine Meßfeder (10) ist an einer Federaufhängung (11) am Cassettengehäuse (1) und am Schlitten (8) befestigt. Der Schlitten (8) ist mit starren Zeigern (12, 15) und mit flexiblen Streifen (17) verbunden, die zu den Schmalseiten des Cassettengehäuses (1) umgelenkt werden. Die Zeiger (12, 15) und die Enden der flexiblen Streifen (17) sind als Drehmomentanzeige zur Bestimmung des auf die Bandteller (2, 3) übertragenen Drehmoments an mehreren Seiten des Cassettengehäuses (1) sichtbar.

Drehmoment-Meßcassette für Cassetten-Tonbandgeräte

Die Erfindung betrifft eine Drehmoment-Meßcassette für Cassetten-Tonbandgeräte mit einem Cassettengehäuse, in dem zwei Bandteller drehbar gelagert sind, zwischen denen ein an beiden Bandtellern befestigtes Tonband über Umlenkelemente auf- und abspulbar ist, mit einer Meßfeder, deren Auslenkung in Abhängigkeit von dem zu messenden Drehmoment einen Zeiger auf einer Meßskala verstellt.

Das von einem Cassetten-Tonbandgerät aufgebrachte Drehmoment muß beim schnellen Bandvor- und -rücklauf sowie beim langsamen Bandvorlauf in vorgegebenen bestimmten Bereichen liegende Werte erreichen, wenn eine einwandfrei Funktion des Geräts gewährleistet sein soll. Deshalb werden von den Geräteherstellern Mindestwerte für die Drehmomente vorgegeben. Bei Wartungs- und Reparaturarbeiten müssen deshalb die vom Gerät aufgebrachten Drehmomente gemessen werden, um zu kontrollieren, ob die vorgegebenen Werte erreicht werden.

Zur Drehmomentenmessung an Cassetten-Tonbandgeräten werden Federwaagen verwendet, die jedoch nur statische Messungen erlauben. Außerdem ist insbesondere bei schwer zugänglichen Cassettenaufnahmen erforderlich, das Gerätegehäuse zu öffnen.

Um eine vereinfachte Messung zu ermöglichen, die auch während des langsamen Bandvorlaufs durchgeführt werden kann,
ist eine Drehmoment-Meßcassette der eingangs genannten
Art entwickelt worden, bei der die Bandteller jeweils
aus zwei gegeneinander verdrehbaren Teilen bestehen, zwischen denen die Meßfeder angeordnet ist. Einer der beiden Teile trägt die Skala, der andere Teil ist mit einem
Zeiger versehen, so daß die von dem übertragenen Drehmoment abhängige Drehauslenkung der beiden Bandtellerteile
relativ zueinander auf der Meßskala abgelesen werden
kann.

Bei der Drehmomentenmessung während des langsamen Vorlaufs, die von besonderer Bedeutung für die Funktionsprüfung des Tonbandgerätes ist, dreht sich die Meßskala
mit dem angetriebenen Bandteller, wodurch die Ablesung
erschwert wird. Die bekannte Drehmoment-Meßcassette kann
nur bei Tonbandgeräten eingesetzt werden, bei denen die
Bandteller im Betrieb sichtbar sind. Wenn dieser Teil der
Cassette im Betrieb abgedeckt ist, muß das Gerät für die
Messung geöffnet oder zumindest diese Abdeckung entfernt
werden; dies ist mit erheblichem Arbeitsaufwand verbunden. An Geräten, bei denen im Betrieb nur eine Schmalseite der Cassette sichtbar ist, ist eine Drehmomentenmessung mit der bekannten Meßcassette nicht möglich.

Aufgabe der Erfindung ist es daher, eine Drehmoment-
Meßcassette der eingangs genannten Art so auszubilden,
daß das gemessene Drehmoment auf einer auch beim langsamen Bandvorlauf stillstehenden Meßskala abgelesen werden kann, die auch bei solchen Geräten sichtbar ist, bei denen die Bandteller im Betrieb verdeckt sind.

Diese Aufgabe wird erfindungsgemäß dadurch gelöst, daß das Tonband über ein an einem beweglichen Bauteil angeordnetes Umlenkelement geführt ist, daß die Meßfeder an einer Federaufhängung am Cassettengehäuse und am beweglichen Bauteil angreift, und daß das bewegliche Bauteil mit mehreren Anzeigeelementen verbunden ist, die längs mehreren Außenflächen der Cassette bewegbar sind. Das Drehmoment kann daher in konstruktiv sehr einfacher Weise an mehreren Außenflächen der Cassette abgelesen werden, so daß die gleiche Drehmoment-Meß-cassette bei unterschiedlichen Bauarten von Cassetten-Tonbandgeräten eingesetzt werden kann, auch wenn bei den verschiedenen Bauarten verschiedene Außenseiten der Cassette von außen sichtbar sind. Die erfindungsgemäße Drehmoment-Meßcassette ist in einheitlicher Ausführung daher ebenso bei Cassetten-Tonbandgeräten einsetzbar, bei denen die Oberseite sichtbar ist, wie auch bei Cassetten-Tonbandgeräten, bei denen die Cassetten in einen Cassetten-Aufnahmeschlitz eingeschoben werden, so daß nur eine der Schmalseiten der Cassette von außen sichtbar ist. Für alle Betriebsarten und beide Bandlaufrichtungen erfolgt der Meßausschlag in derselben Richtung.

In besonders vorteilhafter Ausführung des Erfindungsgedankens ist vorgesehen, daß das Tonband über eine an einem längsbeweglichen Schlitten gelagerte Umlenkrolle geführt ist, daß die Meßfeder an einer Federaufhängung am Cassettengehäuse und am Schlitten angreift, und daß der Schlitten mit mehreren Zeigern verbunden ist, die an Skalen längs mehreren Außenflächen der Cassette bewegbar sind.

Da die Auslenkung des unter Federbelastung stehenden Schlittens ein Maß für das übertragene Drehmoment ist, kann dieses Drehmoment an einer am Gehäuse feststehenden Skala abgelesen werden. Da der Schlitten nur eine Längsbewegung ausführt, ist es in konstruktiv sehr einfacher Weise möglich, die Schlittenbewegung mittels mehrerer Zeiger so anzuzeigen, daß eine Ablesung je nach der Anordnung der Cassette im Tonbandgerät an mehreren Außenflächen der Cassette erfolgen kann. Für alle Betriebsarten und beide Bandlaufrichtungen erfolgt der Meßausschlag des Zeigers in derselben Richtung und auf derselben, jeweils entsprechend der Anordnung der Cassette im Tonbandgerät am günstigsten abzulesenden Meßskala.

Diese Meßskala kann beispielsweise im Bereich des üblichen Sichtfensters einer Tonbandcassette liegen, weil mindestens dieses Sichtfenster bei denjenigen Tonbandgeräten von außen sichtbar ist, bei denen die Cassette parallel zu einer Außenfläche des Gerätes angeordnet ist. Bei Tonbandgeräten, bei denen die Cassette in das Gerät eingeschoben wird, erfolgt die Ablesung des Drehmoments auf einer Meßskala, die an einer Schmalseite der Cassette angeordnet ist, die von außen sichtbar bleibt. Die Längsbewegung des Schlittens kann in einfacher Weise in eine Zeigerbewegung entlang einer Schmalseite der Cassette umgesetzt werden, und zwar sogar entlang derjenigen Schmalseiten, die im rechten Winkel zur Schlittenbewegungsrichtung verlaufen. In Weiterbildung des Erfindungsgedankens ist vorgesehen, daß die hierfür erforderliche Zeigerumlenkung dadurch erreicht wird, daß der Zeiger von einem freien Ende eines flexiblen Streifens gebildet wird, der mit seinem anderen Ende am Schlitten befestigt ist und der in einer Umlenkführung um 90$^{o}$ umgelenkt wird.

Mit geringem Bauaufwand kann die Meßcassette so ausgeführt werden, daß die Anzeige des Drehmoments gleichzeitig auf Meßskalen erfolgt, die im Bereich des üblichen Sichtfensters einer Cassette und an drei Schmalseiten liegen, so daß die Meßcassette universell verwendet werden kann für alle Bauarten von Cassetten-Tonbandgeräten, bei denen nur mindestens noch ein Teil der Cassette sichtbar ist, nämlich mindestens eine der Schmalseiten oder die Oberseite der Cassette.

Zweckmäßigerweise wird das Tonband an der am Schlitten gelagerten Umlenkrolle um 180° umgelenkt. Dann wirkt die mit ausreichender Genauigkeit dem zu messenden Drehmoment entsprechende Bandzugkraft zweimal in derselben Richtung auf den federbelasteten Schlitten, wodurch die unvermeidbaren Meßfehler infolge der Schlittenreibung sehr niedrig gehalten werden.

Zweckmäßigerweise ist die Meßfeder eine Zugfeder, deren Federaufhängung am Cassettengehäuse in Federlängsrichtung justierbar ist, um eine Nullpunkteinstellung der Meßcassette vornehmen zu können.

Mit besonders geringem Bau- und Platzaufwand läßt sich die Justierung der Federaufhängung dadurch erreichen, daß die Federaufhängung am Cassettengehäuse durch ein sich angenähert im rechten Winkel zur Federlängsrichtung erstreckendes, verbiegbares Bauteil gebildet wird.

Nach einer anderen Ausführungsform der Erfindung können die Anzeigeelemente mit den beweglichen Bauteilen verbundene Skalen sein, die längs mehreren Außenflächen der Cassette bewegbar sind. Der Zeiger, dessen Stellung gegenüber der Skala abgelesen wird, ist bei dieser Ausführungs-

0023304

form fest am Gehäuse angeordnet, beispielsweise als ein Strich auf einem Fenster des Cassettengehäuses.

Anstelle eines nur längsbeweglichen Schlittens kann das bewegliche Bauteil auch so ausgeführt sein, daß es um einen Drehpunkt am Cassettengehäuse schwenkbar ist. Dadurch wird in besonders einfacher Weise eine Lagerungsmöglichkeit für das bewegliche Bauteil am Cassettengehäuse geschaffen.

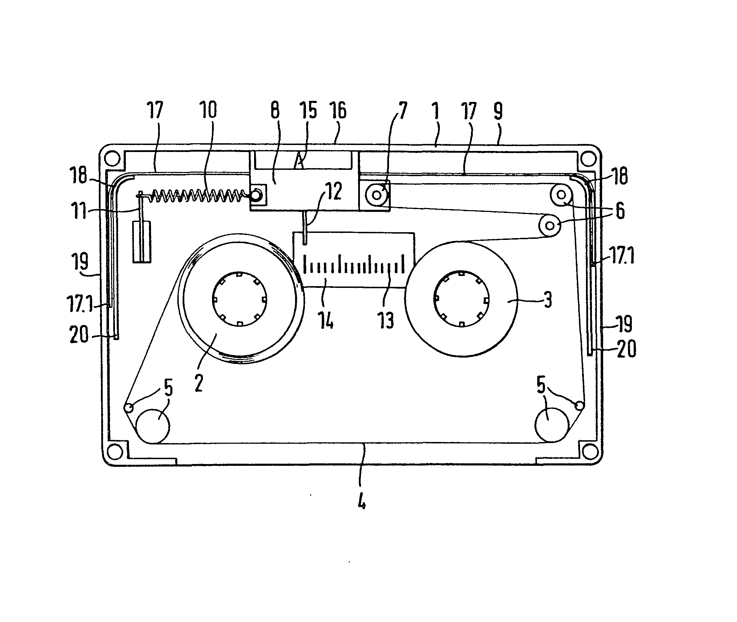

Die Erfindung wird nachfolgend an einem Ausführungsbeispiel nähert erläutert, das in der Zeichnung dargestellt ist.

Die Zeichnung zeigt in vereinfachter Darstellungsweise eine geöffnete Drehmoment-Meßcassette mit einem Gehäuse 1, in dem zwei Bandteller 2 und 3 drehbar gelagert sind. Ein Tonband 4 oder ein zumindest in seinen physikalischen Eigenschaften einem Tonband entsprechendes Band ist mit seinen beiden Enden an den Bandtellern 2 und 3 befestigt und ist in der bei Tonbandcassetten üblichen Weise über Umlenkpfosten 5 im Gehäuse 1 geführt. Außerdem ist das Tonband 4 über zwei nahe beieinanderstehende, im Gehäuse drehbar gelagerte Umlenkrollen 6, die nahe an einer der Ecken des Cassettengehäuses angeordnet sind.

Zwischen diesen beiden Umlenkrollen 6 läuft das Tonband 4 über eine Umlenkrolle 7, die drehbar an einem Schlitten 8 gelagert ist, der an seinem Längsrand 9 der Cassette entlangbewegt werden kann. Eine Zugfeder 10 ist mit ihrem einen Ende am Schlitten 8 befestigt und mit ihrem anderen Ende an einer Federaufhängung, die durch das freie Ende eines biegsamen Stabes 11 gebildet wird, der mit seinem anderen Ende am Gehäuse 1 eingespannt ist. Der Stab 11 erstreckt sich im rechten Winkel zur Längsrichtung der Zugfeder 10.

Der Schlitten 8 ist mit einem starren Zeiger 12 verbunden, der sich bei einer Bewegung des Schlittens 8 längs einer Meßskala 13 bewegt, die im Bereich des üblichen Sichtfensters 14 der Cassette angeordnet ist. Ein weiterer, starr mit dem Schlitten 8 verbundener Zeiger 15 bewegt sich bei einer Schlittenbewegung entlang einer Meßskala 16, die am Längsrand 9 der Cassette angebracht ist, und zwar vorzugsweise an einem (nicht im einzelnen dargestellten) Fenster im Cassettengehäuse 1. Zweckmäßigerweise wird das Cassettengehäuse aus einem transparenten Kunststoff gespritzt, was ein Wegfallen der speziellen Sichtfenster zur Folge hat.

An seinen beiden Enden ist der Schlitten 8 jeweils mit einem flexiblen Streifen 17 verbunden, der an den Ecken der Cassette mittels einer Umlenkführung 18 um 90° umgelenkt wird. Jeweils das freie Ende 17.1 des Streifens 17 bewegt sich bei einer Schlittenbewegung entlang einer Skala 19, die in ähnlicher Weise wie die Skala 16 an den beiden stirnseitigen Schmalseiten der Cassette ausgebildet ist, vorzugsweise ebenfalls an einem Fenster des Cassettengehäuses 1.

Wenn der Bandantrieb des zu untersuchenden Cassetten-Tonbandgeräts im Vorlauf oder Rücklauf eine Zugkraft auf das Tonband 4 ausübt, wird das dabei durch das Gerät aufgebrachte Drehmoment durch eine entsprechende Auslenkung des Schlittens 8 gemessen und kann an jeder der Skalen 13, 16 oder 19 mittels der Zeiger 12, 15 oder 17.1 abgelesen werden. An welcher dieser Meßskalen die Ablesung erfolgt, hängt von der jeweiligen Anordnung der Cassette im Tonbandgerät ab, d. h. davon, welcher Teil der Cassette im Betrieb von außen sichtbar ist.

Zur Führung der Streifen 17 sind vorzugsweise Stege 20 im Bereich der Meßskalen 19 vorgesehen. Die Skalen können mittels Siebdruck oder transparentem Aufkleber auf das Cassettengehäuse aufgebracht werden. Die flexiblen Streifen 17 sollten mindestens so steif ausgeführt sein, daß sie sich zwischen dem Schlitten 8 und den Umlenkführungen 18 nicht verformen.

Bei dem dargestellten Ausführungsbeispiel ist die Zugfeder 10 so ausgelegt, daß der Meßbereich für das Drehmoment etwa 0-1,1 Ncm beträgt. Damit ist eine Messung bei allen handelsüblichen Cassetten-Tonbandgeräten möglich. Die Länge des Tonbandes 4 ist so gewählt, daß sich bei der üblichen Bandgeschwindigkeit von 4,76 cm/s eine Laufzeit von etwa 3 Minuten ergibt. Diese Zeit ist ausreichend, um während des langsamen Bandvorlaufs die Messung des Aufwickel-Drehmoments durchzuführen (dynamische Messung). Dabei ist die Bandlänge aber noch so gering, daß die beim Abwickeln bzw. Aufwickeln des Bandes auftretende Änderung des wirksamen Wickeldurchmessers vernachlässigbar klein bleibt.

Abweichend von dem dargestellten Ausführungsbeispiel der Zugfeder 10 kann die Meßfeder auch in anderer Weise ausgeführt sein, beispielsweise als Biegefeder, Spiralfeder, Druckfeder oder als Gummi-Federelement, beispielsweise als Gummiband.

Während der Schlitten 8 bei dem dargestellten Ausführungsbeispiel nur längsbeweglich ausgeführt ist, kann abweichend davon anstelle des Schlittens 8 beispielsweise auch eine Scheibe oder ein Arm verwendet werden, die um einen Drehpunkt am Cassettengehäuse schwenkbar sind. Dabei ist es auch möglich, zwischen dem mit dem Umlenkelement für das Tonband verbundenen beweglichen Bauteil und der am Cassettengehäuse schwenkbar gelagerten Scheibe eine mechanische Übersetzung vorzusehen, um einen möglichst großen Schwenkwinkel der Scheibe zu erreichen.

Anstelle der beschriebenen flexiblen Streifen 17 können auch dünne, flexible Seile verwendet werden. Beim beschriebenen Ausführungsbeispiel wurde dargestellt, daß die Skalen 13, 16 und 19 am Cassettengehäuse angeordnet sind und daß sich die Zeiger 12, 15 und 17.1 an den Skalen entlangbewegen. Es versteht sich, daß diese Anordnung auch umgekehrt werden kann, so daß die Skalen an den fest am Cassettengehäuse angeordneten Zeigern entlangbewegt werden.

Drehmoment-Meßcassette für Cassetten-Tonbandgeräte

Patentansprüche :

1. Drehmoment-Meßcassette für Cassetten-Tonbandgeräte mit einem Cassettengehäuse (1), in dem zwei Bandteller (2, 3) drehbar gelagert sind, zwischen denen ein an beiden Bandtellern befestigtes Tonband (4) über Umlenkelemente (5, 6) auf- und abspulbar ist, mit einer Meßfeder (10), deren Auslenkung in Abhängigkeit von dem zu messenden Drehmoment einen Zeiger auf einer Meßskala verstellt, dadurch gekennzeichnet, daß das Tonband (4) über ein an einem beweglichen Bauteil (8) angeordnetes Umlenkelement (7) geführt ist, daß die Meßfeder (10) an einer Federaufhängung (11) am Cassettengehäuse (1) und am beweglichen Bauteil (8) angreift, und daß das bewegliche Bauteil (8) mit mehreren Anzeigeelementen (12, 15, 17.1) verbunden ist, die längs mehreren Außenflächen der Cassette bewegbar sind.

2.  Drehmoment-Meßcassette nach Anspruch 1,
    dadurch gekennzeichnet,
    daß das Tonband (4) über eine an einem längsbeweglichen Schlitten (8) gelagerte Umlenkrolle (7)
    geführt ist, daß die Meßfeder (10) an einer Federaufhängung (11) am Cassettengehäuse (1) und am
    Schlitten (8) angreift, und daß der Schlitten (8)
    mit mehreren Zeigern (12, 15, 17.1) verbunden ist,
    die an Skalen (13, 16, 19) längs mehreren Außenflächen der Cassette bewegbar sind.

3.  Drehmoment-Meßcassette nach Anspruch 2,
    dadurch gekennzeichnet,
    daß der Schlitten (8) längs eines Längsrandes (9)
    der Cassette bewegbar ist, daß eine Skala (13) im
    Bereich des üblichen Sichtfensters (14) der Cassette
    angeordnet ist, und daß ein mit dem Schlitten (8)
    starr verbundener Zeiger (12) über diese Skala (13)
    bewegbar ist.

4.  Drehmoment-Meßcassette nach Anspruch 3,
    dadurch gekennzeichnet,
    daß eine Skala (16) an der Cassettenschmalseite (9)
    angeordnet ist, an der der Schlitten (8) entlangbewegt wird, und daß ein mit dem Schlitten (8) starr
    verbundener Zeiger (15) über diese Skala (16) bewegbar ist.

5.  Drehmoment-Meßcassette nach Anspruch 3,
    dadurch gekennzeichnet,
    daß an mindestens einer Cassettenschmalseite, die
    sich im rechten Winkel zur Bewegungsrichtung des
    Schlittens (8) erstreckt, eine Skala (19) angeordnet ist, und daß ein an einem Ende am Schlitten (8) befestigter, flexibler Streifen (17) in einer Umlenkführung (18) um 90° umgelenkt wird und sich mit seinem anderen Ende (17.1) als Zeiger über diese Skala
(19) bewegt.

6. Drehmoment-Meßcassette nach Anspruch 2,
   dadurch gekennzeichnet,
   daß das Tonband (4) an der am Schlitten (8) gelagerten Umlenkrolle (7) um 180° umgelenkt wird.

7. Drehmoment-Meßcassette nach Anspruch 1,
   dadurch gekennzeichnet,
   daß die Meßfeder (10) eine Zugfeder ist und daß die
   Federaufhängung (11) am Cassettengehäuse (1) in
   Federlängsrichtung justierbar ist.

8. Drehmoment-Meßcassette nach Anspruch 7,
   dadurch gekennzeichnet,
   daß die Federaufhängung am Cassettengehäuse (1)
   durch ein sich  angenähert im rechten Winkel zur
   Federlängsrichtung erstreckendes, zur Justierung
   verbiegbares Bauteil (11) gebildet wird.

9. Drehmoment-Meßcassette nach Anspruch 2,
   dadurch gekennzeichnet,
   daß das Cassettengehäuse (1) aus transparentem
   Kunststoff besteht und daß die Skalen (13, 16, 19)
   am Cassettengehäuse (1) aufgetragen sind, vorzugsweise mittels Siebdruck.

10. Drehmoment-Meßcassette nach Anspruch 1,
    dadurch gekennzeichnet,
    daß die Anzeigeelemente mit dem beweglichen Bauteil
    verbundene Skalen sind, die längs mehreren Außenflächen der Cassette bewegbar sind.

11. Drehmoment-Meßcassette nach Anspruch 1,
    dadurch gekennzeichnet,
    daß das bewegliche Bauteil um einen Drehpunkt am
    Cassettengehäuse (1) schwenkbar ist.

0023304

1 / 1